# EUROPÄISCHE PATENTSCHRIFT

(11) **EP 3 404 525 B1**
(45) Veröffentlichungstag und Bekanntmachung des Hinweises auf die Patenterteilung: **10.07.2024**
(21) Anmeldenummer: 17171495.9
(22) Anmeldetag: 17.05.2017
(51) Int. Cl.: G06F 3/04883, B60K 35/00, B60K 35/10, B60K 35/28, G01C 21/36

(54) **VERFAHREN UND VORRICHTUNG ZUM BEDIENEN EINES INFOTAINMENT-SYSTEMS SOWIE KRAFTFAHRZEUG UND COMPUTERPROGRAMM**
METHOD AND DEVICE FOR OPERATING AN INFOTAINMENT SYSTEMS, MOTOR VEHICLE AND COMPUTER PROGRAM
PROCÉDÉ ET DISPOSITIF D'UTILISATION D'UN SYSTÈME DE DIVERTISSEMENT ÉDUCATIF ET VÉHICULE AUTOMOBILE ET PROGRAMME D'ORDINATEUR

(43) Veröffentlichungstag der Anmeldung: 21.11.2018
(73) Patentinhaber: VOLKSWAGEN AKTIENGESELLSCHAFT, 38440 Wolfsburg (DE)
(72) Erfinder: FRANK, Hendrik, 38446 Wolfsburg (DE); SCHULZ, Kati, 10243 Berlin (DE); PERKUHN, Janine, 10437 Berlin (DE); LOU, Jian, 10707 Berlin (DE); SCHMIDT, Alexander, 10367 Berlin (DE)

(56) Entgegenhaltungen:
- DE-A1- 102013 224 979
- US-A1- 2005 022 130
- US-A1- 2009 222 770

## Beschreibung

Der Vorschlag betrifft das technische Gebiet von sogenannten User Interfaces. Dabei geht es im Besonderen um ein Verfahren und eine Vorrichtung zum Bedienung eines Infotainment-Systems. Solche Systeme werden vor allem in Fahrzeugen eingesetzt. Der Vorschlag betrifft weiterhin ein Computerprogramm und ein Kraftfahrzeug das eine Vorrichtung gemäß dem Vorschlag aufweist.

Die Bedienung von einem Infotainment-System welches im Fahrzeug installiert ist, mittels eines berührungsempfindlichen Bildschirms ist während der Fahrt erlaubt und wird heute oft in Kraftfahrzeugen eingesetzt. Mit dem berührungsempfindlichen Bildschirm können vielfältige Funktionen des Infotainment-Systems bedient werden, Navigations-System, Telefon, Musikanlage und Radio, Klimaanlage, usw. Oft sind für die Bedienung Einträge aus Datenbanken, auszuwählen, so z.B. bei Musiktiteln, Navigationszielen, Telefonbucheinträgen, usw. Das Infotainment-System kann dabei über den berührungsempfindlichen Bildschirm, der oft im Fahrzeug in der Mittelkonsole eingebaut ist, bedient werden oder über ein mobiles Endgerät wie Smartphone, das nicht fest verbaut ist, sondern mit einer besonderen Halterung befestigt wird.

Für die Bedienung einer touchbasierten Schnittstelle, die im Fahrzeug fest installiert ist, während der Fahrt müssen die Bedienfelder in Form von "Buttons", "Slidern", Eingabefeldern, usw. physische Mindestgrößen einhalten, damit sie relativ leicht zu finden und noch relativ ablenkungssicher zu bedienen sind. Ein wichtiger Aspekt dabei ist, dass die Bedienfelder einfach auffindbar und fehlerfrei zu treffen sind. Ein Problem besteht zum Beispiel darin, dass die einzelnen Tasten einer auf der Anzeigeeinheit dargestellten klassischen QWERTZ-Tastatur diese Mindestgröße nicht einhalten können, zumindest, wenn man von der physischen Displaygröße eines herkömmlichen Smartphones ausgeht. Ist ein wesentlich größeres Display verbaut etwa ein 15" Touchscreen oder größer, so könnten die Mindestgrößen für Buttons nach den zu beachtenden NHTSA-Guidelines durchaus eingehalten werden. Die National Highway Traffic Safety Administration (NHTSA) ist die zivile US-Bundesbehörde für Straßen- und Fahrzeugsicherheit die solche Guidelines verabschiedet hat. Zur Lösung dieses Problems wurde in einigen Anwendungsfällen dieser Art auf die Eingabemethode der Handschrifterkennung zurückgegriffen, um Suchbegriffe einzugeben oder bestimmte Listen zu sortieren. Die Bedienperson kann dabei ein Zeichen (Buchstaben, Ziffer, Sonderzeichen, usw.) eingeben in dem sie das Zeichen entweder mit dem Finger oder einem Hilfsmittel, z.B. Eingabestift auf dem berührungsempfindlichen Bildschirm schreibt. Das Zeichen wird mit Hilfe eines Handschrifterkennungsmoduls ausgewertet und als Zeichen erkannt. Das Zeichen kann dann in dem Eingabefeld als erkanntes Zeichen angezeigt werden. Gleichzeitig kann die zu durchsuchende Liste so umsortiert werden, dass sie alle Einträge alphanumerisch auflistet, die mit dem eingegebenen Zeichen beginnen.

Aus der DE 10 2011 110 978 A1 ist ein Verfahren zum Bedienen einer elektronischen Einrichtung oder einer Applikation mit einer entsprechenden Vorrichtung bekannt. Für die Suche in einer Liste von Einträgen z.B. in einer Liste von Musikstücken oder Navigationszielen ist es daraus bekannt für die bequeme Eingabe von Suchkriterien in das Suchfeld auf dem berührungsempfindlichen Bildschirm einen Buchstaben oder ein Zeichen handschriftlich einzugeben. Dabei wird die handschriftliche Eingabemöglichkeit automatisch aktiviert und es kann auf dem gesamten Bereich des berührungsempfindlichen Bildschirms die handschriftliche Eingabe erfolgen.

Aus der DE 10 2011 113 600 A1 ist ein Verfahren und Verfahren und Einrichtung zum Bedienen eines Infotainment-Systems bekannt, bei dem durch eine Aktivierungshandlung eine Handschriftenerkennung aktiviert wird. Die Aktivierungshandlung besteht aus einer Geste, die auf einem Touchscreen ausgeführt wird. Dies erlaubt eine einfache und intuitive Aktivierung der Handschriftenerkennung.

Aus der_DE 10 2013 224 979 A1 ist ein Verfahren zum Betreiben einer Bedienvorrichtung für eine Kraftfahrzeugkomponente bekannt, wobei die Bedienvorrichtung eine Anzeigeeinrichtung sowie eine berührungssensitive Eingabefläche aufweist und bei dem Verfahren eine Steuereinrichtung auf der Anzeigevorrichtung zumindest einen Auswahlvorschlag anzeigt und auf der berührungssensitiven Eingabefläche ein Bedienfeld zum Erfassen einer Eingabe eines Benutzers abgrenzt. Über das Bedienfeld werden mehrere unterschiedliche Bedienfunktionen der Bedienvorrichtung gesteuert, indem die Steuereinrichtung eine Berührung der Bedienfläche innerhalb des Bedienfelds erkennt und nach einer vorbestimmten Zeitdauer überprüft, ob die Berührung nur ein Antippen war, und gegebenenfalls einen vom Benutzer ausgewählten Auswahlvorschlag als Eingabe an die Kraftfahrzeugkomponente ausgibt und andernfalls eine von dem Benutzer innerhalb des Bedienfelds gezeichnete Zeichenspur erfasst.

Aus der_US 2009/0222770 A1 ist ein Verfahren zum Eingeben einer Steueranweisung für ein Handgerät bekannt. Bei dem Verfahren wird eine von einem Benutzer eingegebene Schreibspur von einem Berührungsmodul empfangen. Die Schreibspur wird durch ein Erkennungsmodul analysiert, um die Schreibspur in Spurdaten umzuwandeln. Die Spurdaten werden mit Merkmalsdaten verglichen, die in einer Speichereinheit gespeichert sind. Wenn eine Übereinstimmung vorliegt, wird eine Programmanweisung ausgeführt, die den Merkmalsdaten entspricht.

Aus der_US 2005/0022130 A1 ist ein Verfahren zum Eingeben eines Zeichens in ein elektronisches Gerät bekannt. Bei dem Verfahren wird eine Eingabe erkannt und im Ansprechen auf das Erkennen der Eingabe ein temporärer Eingabebereich aktiviert und auf einer Anzeige des elektronischen Geräts angezeigt. Für den Fall, dass ein relevantes Ereignis erkannt wird, wird die Anzeige beendet und der temporäre Eingabebereich deaktiviert.

Die bekannten Lösungen sind mit einigen Nachteilen behaftet. Dies wurde im Rahmen der Erfindung erkannt. Bei den bekannten Lösungen besteht das Problem, dass bei der Eingabemethode mit Handschrifterkennung oft nicht zwischen dem üblichen Scroll-Vorgang in der Liste und der Handschrifteingabe unterschieden werden konnte. Zur Erklärung: eine Scroll-Geste besteht z.B. darin, dass die Bedienperson auf der angezeigten Liste mit einem Finger von Oben nach Unten wischt oder umgekehrt. Diese Geste könnte z.B. als Buchstabe "i" oder als Ausrufezeichen "!" erkannt werden.

Da es hier - nach Nutzertests - immer wieder zu Fehlbedienungen kam, besteht die Aufgabe der Erfindung darin eine andere Form der Aktivierung eines Betriebsmodus zur Handschriftenerkennung zu realisieren bei der das oben genannte Problem vermieden wird. Gleichzeitig soll das neue Bedienkonzept eine möglichst flüssige Interaktion zulassen, und sich nahtlos in den Bedienvorgang einfügen. Eine besondere Herausforderung besteht darin, dass die Bedienung während der Fahrt ablenkungssicher ermöglicht werden soll, ohne dass der Fahrer seine volle Konzentration auf den Bildschirm richten muss.

Diese Aufgabe wird durch ein Verfahren zum Bedienen eines Infotainment-Systems gemäß Anspruch 1, eine Vorrichtung gemäß Anspruch 11, ein Computerprogramm gemäß Anspruch 12 und ein Kraftfahrzeug gemäß Anspruch 13 gelöst.

Die abhängigen Ansprüche beinhalten vorteilhafte Weiterbildungen und Verbesserungen der Erfindung entsprechend der nachfolgenden Beschreibung dieser Maßnahmen.

Erfindungsgemäß wird ein Verfahren zum Bedienen eines Infotainment-Systems vorgeschlagen, bei dem eine Liste von auswählbaren Einträgen auf einer berührungsempfindlichen Anzeigeeinheit angezeigt werden. Dabei gibt es im Prinzip zwei verschiedene Anwendungsfälle. Zum einen wird ein Auswahlkriterium eingegeben, z.B. ein Buchstabe. Als Ergebnis wird die angezeigte Liste umsortiert, so dass Listeneinträge angezeigt werden, die mit dem Buchstaben anfangen, der als Auswahlkriterium eingeben wurde. Zum anderen kann ein Suchkriterium eingegeben werden. Damit wird eine dedizierte Suche nach bestimmten Datenbankeinträgen durchgeführt. Dabei erfolgt keine Umsortierung in der angezeigten Liste, sondern es wird praktisch eine neue Liste generiert und angezeigt. Zur Eingabe von Suchkriterien für die Suche von Einträgen in der Datenbank oder von Auswahlkriterien für die angezeigte Liste wird die Anzeige auf einen Modus zur Handschrifterkennung umgeschaltet. Dabei wird zur Aktivierung des Modus zur Handschrifterkennung auf der Anzeigeeinheit ein Bedienfeld in einer Ecke der Anzeigeeinheit eingeblendet. Diese Bedienfeld wird nachfolgend auch als Handschrifterkennungs-Bedienfeld bezeichnet. Damit soll gesagt sein, dass bei Anwählen diese Bedienfeldes der Modus zur Handschrifterkennung aktiviert wird. Der Modus zur Handschrifterkennung wird eingeleitet, wenn die Bedienperson dieses Bedienfeld berührt. Dadurch, dass das Bedienfeld zur Aktivierung des Modus zur Handschrifterkennung in einer Ecke der Anzeigeeinheit dargestellt wird, kann die Bedienperson intuitiv das Bedienfeld finden, ohne dass sie sehr viel Aufmerksamkeit auf die Bedienung der Anzeigeeinheit richten muss. So ist es möglich, dass die Bedienperson den entsprechenden Rand der Anzeigeeinheit ertastet ohne genau hinzusehen und dann mit dem Finger am Rand entlang zur Ecke des Bildschirms wandert um bei Erreichen der Ecke dann das Drücken/Berühren des Bedienfeldes durchzuführen. Die Bedienperson hat durch das Wandern am Rand entlang immer eine haptische Rückmeldung und somit die Bestätigung, dass sie auf dem richtigen Weg zum Auffinden des Bedienfeldes zur Aktivierung des Modus zur Handschrifterkennung ist. Der Modus mit Handschriftenerkennung muss nicht ständig aktiviert sein und eine Fehlfunktion durch Verwechseln der Scroll-Geste mit der Handschrifteneingabe des Buchstaben "i" oder eines anderen Zeichens, wie "!" wird vermieden.

Erfindungsgemäß wird der Modus zur Handschrifterkennung nur für einen Teil der berührungsempfindlichen Anzeigeeinheit eingeleitet, wohingegen für den anderen Teil der berührungsempfindlichen Anzeigeeinheit die Auswahlmöglichkeiten für die weiterhin dargestellte Liste erhalten bleiben. D.h. die Scroll-Geste kann auf dem anderen Teil der Anzeigeeinheit durchgeführt werden. Die Eingabe des Buchstaben i müsste in dem ersten Bereich der Anzeigeeinheit durchgeführt werden, dort wo die Handschriftenerkennung aktiv ist. So wird eine Verwechselung der Scroll-Geste mit der Eingabe eines Zeichens per Handschrifteneingabe durch die Separierung in zwei getrennte Bereiche vermieden. Der Teil wo der Modus zur Handschrifterkennung eingeleitet wird, wird im Folgenden auch als Handschrifterkennungs-Eingabefeld bezeichnet.

Erfindungsgemäß bleiben die Einträge der Liste ebenfalls in dem Teil der berührungsempfindlichen Anzeigeeinheit sichtbar, in dem der Modus zur Handschrifterkennung aktiviert wurde. Vorzugsweise wird der Bereich, in dem die Handschrifteneingabe möglich ist halbdurchlässig angezeigt. Dadurch ist der Nutzer zu jeder Zeit fähig alle angezeigten Listeneinträge durch die opake Fläche zu lesen. Darüber hinaus kann er jeden Listeneintrag durch "Antippen" / Berühren in dem nicht überlagerten Bereich der Anzeigeeinheit auswählen. In einer anderen Ausführungsform könnte die Auswahl eines Eintrages auch in dem Bereich wo die Handschriftenerkennung aktiviert wurde ermöglicht werden. Dazu müsste die sogenannte "Tap-Geste", das ist die Geste mit der ein Listeneintrag ausgewählt wird, von der Scroll-Geste unterschieden werden.

Zur Hervorhebung ist es vorteilhaft, wenn das Bedienelement, mit dem der Modus zur Handschrifterkennung aktiviert wurde, eine abgerundete Form aufweist. Die runde Form ist von Vorteil, da sie sich eindeutig von den darunter befindlichen, eckig geformten Bedienelementen der Liste unterscheidet. Andernfalls besteht das Problem, dass das Bedienelement mit den anderen Elementen verschwimmt.

Für die Trennung der beiden Bereiche ist es von Vorteil, dass der Bereich der berührungsempfindlichen Anzeigeeinheit auf dem der Modus zur Handschrifterkennung aktiviert wurde, eine abgerundete Form aufweist, in deren Zentrum das Bedienfeld zur Aktivierung des Modus zur Handschrifterkennung lokalisiert ist. Dabei ist es weiterhin von Vorteil, wenn der Teil der berührungsempfindlichen Anzeigeeinheit auf dem der Modus zur Handschrifterkennung aktiviert wurde, in etwa die Form eines Viertelkreises oder einer Viertelellipse aufweist. Die abgerundete Form für die aktivierte Fläche ist ebenfalls von Vorteil: Wäre sie rechteckig, würde sie (sofern der Fahrer den Übergang von dem kleinem Bedienfeld zu der großen Bedienfläche nicht sieht, was häufig der Fall ist während der Fahrt) sich optisch durch ihre Transparenz nur minimal von der Liste abheben. Bei etwas größeren Bildschirmen unterstützt es darüber hinaus das Auffinden der Bereiche durch eine natürliche Armbewegung. Der Zeigefinger einer ausgestreckten Hand malt praktisch automatisch die beschriebene Trennlinie auf den Bildschirm, wenn der Arm in Richtung Anzeigeeinheit ausgestreckt wird. Dies gilt sowohl für Fahrzeuge mit Linkslenker, wenn also der rechte Arm zur Anzeigeeinheit des Infotainment-Systems ausgestreckt wird, wie auch für Fahrzeuge mit Rechtslenker, wenn der linke Arm zur Anzeigeeinheit des Infotainment-Systems ausgestreckt wird. Beim Linkslenker sollte das Bedienfeld zur Aktivierung des Modus zur Handschrifterkennung vorzugsweise in der rechten unteren Ecke der Anzeigeeinheit dargestellt werden. Beim Rechtslenker sollte das das Bedienfeld zur Aktivierung des Modus zur Handschrifterkennung vorzugsweise in der linken unteren Ecke der Anzeigeeinheit dargestellt werden.

Es ist ebenfalls von Vorteil, wenn in dem Fall des Erkennens eines Zeichens per Handschrifteingabe, die Ausgabe der Listeneinträge aktualisiert wird, derart, dass der dargestellte Teil der Liste mit denjenigen Einträgen beginnt, die mit dem Zeichen beginnen, das von der Handschrifterkennung identifiziert wurde. So wird die Ausgabe der Liste durch die Eingabe eines Zeichens / Buchstabens so umsortiert bis der gewünschte Eintrag sichtbar wird. Es können mehrere Zeichen auf diese Weise hintereinander eingegeben werden, wodurch die angezeigten Listeneinträge immer näher an den gewünschten Listeneintrag rücken. Ziel ist, dass schließlich durch die nähere Spezifizierung im Auswahlkriterium der gesuchte Eintrag auf der Anzeige erscheint. In einer alternativen Gestaltung können alle Einträge angezeigt werden, die das Zeichen an beliebiger Stelle enthalten. Dies kann von Vorteil sein, wenn es sich um ein selten verwendetes Sonderzeichen handelt.

Darüber hinaus ist es von Vorteil, wenn ein Suchfeld zusätzlich angezeigt wird, in das Eingaben zum Suchen von Einträgen in der Datenbank gemacht werden können und der Modus zur Handschrifterkennung ebenfalls eingeleitet wird, wenn die Bedienperson das Suchfeld berührt. Zwar ist das Treffen des Suchfeldes während der Fahrt schwieriger, jedoch kann es Fahrzustände geben, wo der Fahrer mehr Aufmerksamkeit auf die Bedienung des Infotainment-Systems richten kann, etwa beim Stehen an einer roten Ampel, dann kann das Auswählen des Suchfeldes direkter sein als der Weg über das Berühren des Bedienfeldes in der Ecke.

Hier ist es ebenfalls von Vorteil, wenn in dem Fall des Erkennens eines Zeichens per Handschrifteingabe, die Ausgabe der Listeneinträge aktualisiert wird, derart, dass nur diejenigen Listeneinträge dargestellt werden, die eine Übereinstimmung mit dem Zeichen haben, das von der Handschrifterkennung identifiziert wurde und für das Suchfeld eingegeben wurde. Wie zuvor erwähnt, können mehrere Zeichen auf diese Weise hintereinander eingegeben werden, wodurch die Suche weiter eingeschränkt wir. Ziel ist, dass schließlich die Suche so weit eingeschränkt ist, dass der gesuchte Eintrag auf der Anzeige erscheint. In einer alternativen Gestaltung können alle Einträge angezeigt werden, die das Zeichen an beliebiger Stelle enthalten. Dies kann wie zuvor erwähnt von Vorteil sein, wenn es sich um ein selten verwendetes Sonderzeichen handelt.

Wenn die Suche bereits eingeschränkt wurde, kann es von Vorteil sein den Modus zur Handschrifterkennung schnell zu beenden statt weitere Eingaben zu machen um dann durch einen kurzen Scroll-Vorgang zum gewünschten Eintrag zu gelangen. Dann ist es von Vorteil, durch Scrollen in der Liste der angezeigten Listeneinträge, durch Auswahl eines Bedienfeldes auf dem ein Schließsymbol dargestellt ist, durch Vollziehen einer Schließ-Geste im Bereich wo der Modus zur Handschrifterkennung aktiviert wurde oder durch Berühren eines Seitenbereichs neben der angezeigten Liste den Modus zur Handschriftenerkennung zu beenden. Die Schließ-Geste wird auch als "Flick-Geste" bezeichnet und kann die Form eines Ziehens des Fingers von links oben nach rechts unten haben. Dies gilt für die Variante mit Links-Lenker. Bei der Variante mit Rechts-Lenker wäre es dementsprechend die Geste des Ziehens des Fingers von rechts oben nach links unten. Außerdem kann jederzeit ein Listeneintrag ausgewählt werden, wodurch sich das Handschrifterkennungs-Eingabefeld ebenfalls schließt bzw. man direkt zur entsprechenden Auswahl gelangt.

Hingegen ist es von Vorteil, wenn durch das Löschen eines Zeichens im Suchfeld die Anzeige der Liste dementsprechend aktualisiert wird, jedoch der Modus zur Handschrifterkennung erhalten bleibt. Hier ist es nämlich wahrscheinlich, dass die Bedienperson sich bei der vorigen Eingabe vertan hat und ein anderes Zeichen eingeben möchte.

Für die ablenkungssichere Gestaltung der Bedienung kann es von Vorteil sein, wenn die Eingabe in das Suchfeld in einem anderen Betriebsmodus durch Bedienen einer eingeblendeten Tastatur auf der Anzeigeeinheit erfolgt, wobei dieser Betriebsmodus jedoch bei Einsatz des Infotainment-Systems in einem Fahrzeug unterbunden wird, wenn sich das Fahrzeug in Bewegung befindet.

Ein Ausführungsbeispiel der Erfindung ist in den Zeichnungen dargestellt und wird nachfolgend anhand der Figuren näher erläutert.

Es zeigen:
- Fig. 1: ein Cockpit eines Fahrzeuges mit einem Infotainment-System;
- Fig. 2: ein Blockschaltbild eines Infotainment-Systems;
- Fig. 3: ein Beispiel eines Anzeigebildes des Infotainment-Systems;
- Fig. 4: das Beispiel des Anzeigebildes des Infotainment-Systems gemäß Fig. 3 mit Einblendung des Eingabebereichs in dem die Handschrifterkennung aktiv ist;
- Fig. 5: die Eingabe des Buchstabens R bei der Zielsuche;
- Fig. 6: die resultierende Darstellung bei der Zielsuche nach Eingabe des Buchstaben R gemäß Fig. 5;
- Fig. 7: das Beispiel des Anzeigebildes des Infotainment-Systems gemäß Fig. 4 mit Einblendung des Eingabebereichs in dem die Handschrifterkennung aktiv ist und Einblendung eines Schließkreuzes; und
- Fig. 8: das Beispiel des Anzeigebildes des Infotainment-Systems gemäß Fig. 4 mit Einblendung des Eingabebereichs in dem die Handschrifterkennung aktiv ist bei Vollziehen der Flick-Geste.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

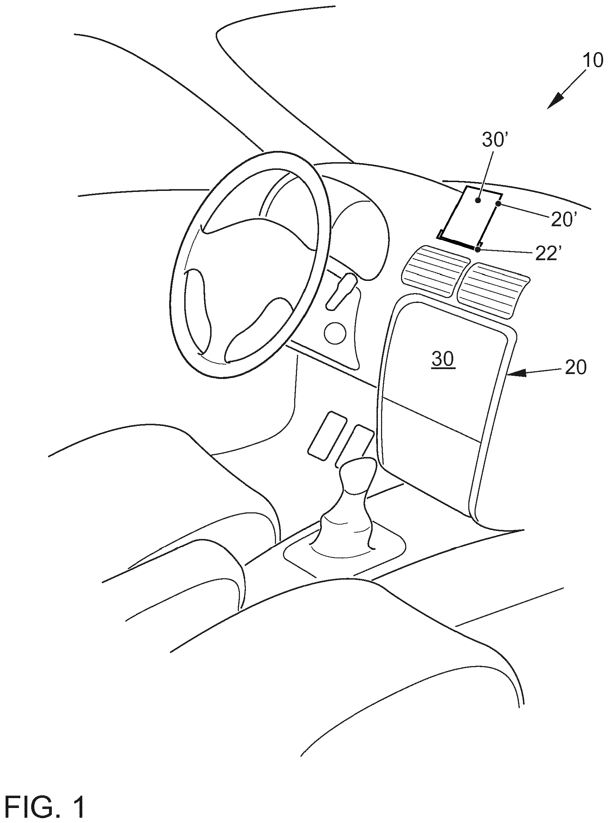

Fig. 1 zeigt das Cockpit eines Fahrzeuges. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw. Der Einsatz der Erfindung wäre allgemein bei Landfahrzeugen, Schienenfahrzeugen und Luftfahrzeugen einsetzbar.

In Fig. 1 ist ein Cockpit eines Fahrzeugs 10 dargestellt, welches mit einer Vorrichtung zum Bedienen eines Infotainment-Systems 20 gemäß einem Ausführungsbeispiel der Erfindung ausgestattet ist. Die Vorrichtung zum Bedienen eines Infotainment-Systems 20 dient dabei insbesondere zur Bedienung von Funktionen des Fahrzeugs 10. Beispielsweise können mit der Vorrichtung 20 ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Derartige Vorrichtungen sind auch unter dem Begriff "Infotainmentsystem" bekannt. Ein Infotainment-System bezeichnet bei Kraftfahrzeugen, speziell PKW, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort zusammengesetzt aus den Worten Information und Entertainment (Unterhaltung). Die Vorrichtung zum Bedienen eines Infotainment-Systems 20 weist im Bereich einer Mittelkonsole des Fahrzeugs 10 eine Anzeigeeinrichtung 30 in Form eines berührungsempfindlichen Bildschirms, auch als "Touchscreen" bezeichnet, auf, wobei dieser Bildschirm insbesondere von einem Fahrer des Fahrzeugs 10 aber auch von einem Beifahrer des Fahrzeugs 10 gut eingesehen und bedient werden kann. Unterhalb des Bildschirms können zudem mechanische Bedienelemente, beispielsweise Tasten, Drehregler oder Kombinationen hiervon wie beispielsweise Drückdrehregler, angeordnet sein.

Es ist ebenfalls die zweite Möglichkeit der Bedienung des Infotainment-Systems skizziert. Dabei erfolgt die Bedienung über ein mobiles Endgerät 20', z.B. Smartphone. Die Bedienung des Smartphones seitens des Fahrers während der Fahrt ist aber nur erlaubt, wenn dieses mit einer Halterung 22' z.B. am Armaturenbrett oder der Scheibe angebracht ist. Z.B. ist die Befestigung in einer sogenannten Cradel (engl. Cradle) möglich. Das ist eine fest verbaute Halterung 22' im Fahrzeug, die oft im Bereich der Klimaeinheit untergebracht ist.

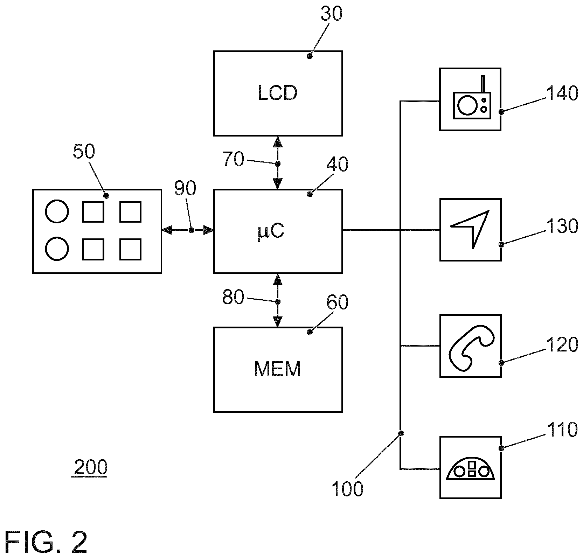

Fig. 2 zeigt schematisch ein Blockschaltbild der erfindungsgemäßen Vorrichtung 20 zum Bedienen eines Infotainment-Systems 200 sowie beispielhaft einige Teilsysteme oder Applikationen des Infotainment-Systems. Die Bedienungs-Vorrichtung 20 umfasst eine berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Der Anzeigeeinheit 30 ist über eine Datenleitung 70 mit der Recheneinrichtung 40 verbunden. Die Datenleitung kann nach dem LVDS-Standard ausgelegt sein. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist eine Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, Ein- und Ausschalten einer Funktion, usw.

Für den Fall, dass stattdessen die Bedienung durch das mobile Endgerät 20` (Smartphone) erfolgt, sind die Komponenten 30, 40, 50, 60 Teil des Smartphones. Üblicherweise findet man am Smartphone aber lediglich Tasten zum Einstellen der Lautstärke, den Ein-/Ausschalter und einen Auslöseknopf für die Kamera, so dass insoweit diese Tasten für das Infotainment-System nicht von Bedeutung sind. Die Lautstärke kann auch in einem entsprechenden Menü auf dem Bildschirm 30' verstellt werden.

Eingaben können aber auch über den berührungsempfindlichen Bildschirm getätigt werden. Damit solche Eingaben flüssig und ablenkungssicher auch während der Fahrt möglich sind, wird erfindungsgemäß ein Betriebsmodus vorgesehen, bei dem Zeichen handschriftlich mit Hilfe einer integrierten Handschrifterkennung eingegeben werden können. Für die Realisierung dieses Betriebsmodus wird von der Recheneinrichtung 40 ein Programmmodul abgearbeitet, dass den Algorithmus zur Handschriftenerkennung enthält. Dieses Programmmodul ist in der Speichereinrichtung 60 gespeichert und wird bei Aktivierung des Betriebsmodus zur Handschriftenerkennung in den Arbeitsspeicher der Recheneinrichtung 40 geladen und kommt zur Abarbeitung. Die Realisierung mittels eines entsprechend programmierten Programmmoduls gilt auch für die anderen Betriebsmodi, die noch erläutert werden.

Die prinzipielle Funktionsweise des Algorithmus zur Handschrifterkennung wird als im Stand der Technik bekannt vorausgesetzt und wird deshalb im Folgenden nicht näher erläutert. Dabei werden die Sensorsignale, die von dem berührungsempfindlichen Bildschirm stammen, über die dargestellte Datenverbindung an die Recheneinrichtung 40 übertragen und dort ausgewertet.

Als Ergebnis können erkannte Zeichen ausgegeben, aber auch die Information, dass kein Zeichen erkannt werden konnte. Wird als Ergebnis ein bestimmtes Zeichen erkannt, so wird die Recheneinrichtung 40 entsprechende Steuerdaten an den berührungsempfindlichen Bildschirm senden, um das erkannte Zeichen auf dem Bildschirm darzustellen.

Die Speichereinrichtung 60 ist über eine Datenleitung 80 mit der Recheneinrichtung 40 verbunden. In dem Speicher 60 ist ein Schriftzugverzeichnis hinterlegt, in dem zu jedem erlaubten oder geltenden Schriftzug eine zugeordnete Aktion eines der Teilsysteme oder Applikationen hinterlegt ist. Beispielsweise ist dem Schriftzug "H" die Aktion "Zielführung zur Heimatadresse starten" eines Navigationssystems 130 zugeordnet. Ferner sind dem Schriftzug "M" die Aktion "Mailbox anrufen" eines Telefons 120, dem Schriftzug "L" die Aktion "Letzte Ziele anzeigen" des Navigationssystems 130 und dem Schriftzug "ZS" die Aktion "Zielführung stoppen" des Navigationssystems 130 zugeordnet. In dem Speicher 60 können weitere Daten gespeichert sein oder gespeichert werden. So ist es beispielsweise möglich, dass der Fahrer selbst Schriftzüge erstellt und diesen Schriftzügen bestimmte Aktionen zuordnet. Diese selbst erstellten Zuordnungen werden in dem Schriftzugverzeichnis abgespeichert. In einer Ausführungsform ist es denkbar, dass die Handschriftenerkennungseinrichtung 50 über eine Datenleitung direkt (das heißt ohne Umweg über die Recheneinrichtung 40) auf den Speicher 60 zugreifen kann.

Die weiteren Teile des Infotainment-Systems Radio 140, Navigationsgerät 130, Telefon 120 und Kombiinstrument 110 sind über den Datenbus 100 mit der Vorrichtung 20 zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems in Frage. Auch Bussysteme, bei denen die Datenübertragung über Lichtwellenleiter geschieht sind einsetzbar. Als Beispiele werden genannt der MOST Bus (Media Oriented System Transport) oder der D2B Bus (Domestic Digital Bus).

Das erfindungsgemäße Verfahren zur Bedienung des Infotainment-Systems wird im Folgenden anhand von einem Ausführungsbeispiel erläutert bei dem der Ablauf der Bedienung und die zugehörigen Bedienmenü-Einblendungen dargestellt sind. Die dargestellten Bedien-Menüs werden jeweils auf der Anzeigeeinheit 30 angezeigt.

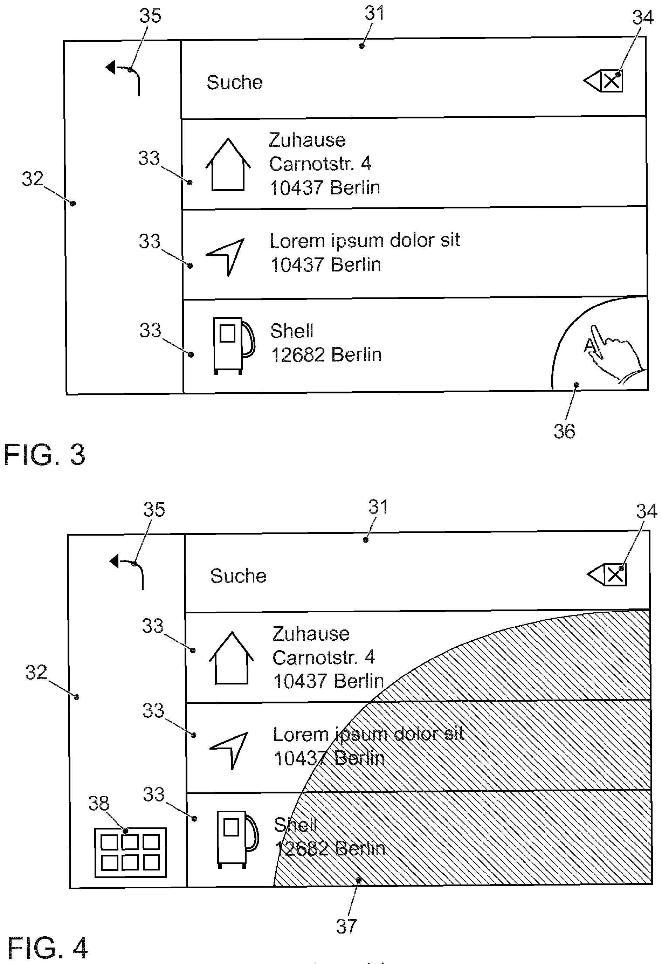

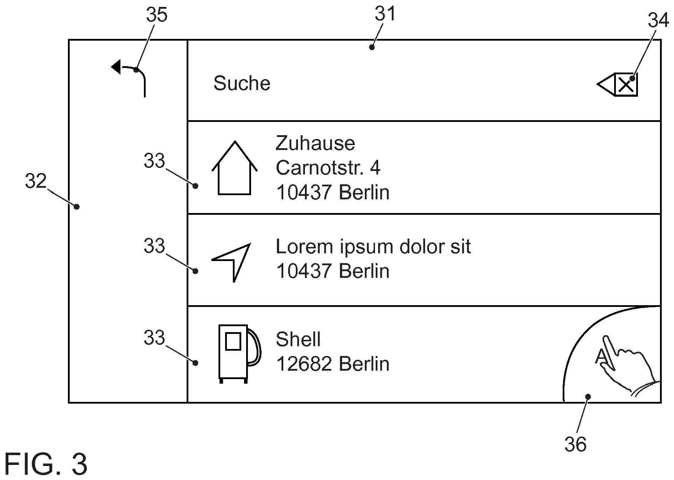

Fig. 3 zeigt verschiedene Felder und Symbole zur Bedienung des Infotainment-Systems. Mit der Bezugszahl 31 ist ein Suchfeld bezeichnet. In dieses Suchfeld können Suchkriterien eingegeben werden. Als Suchkriterien können z.B. Zeichen, Symbole, Buchstaben und Ziffern eingegeben werden. Das Infotainment-System 200 nutzt die eingegebenen Suchkriterien um eine Datenbank zu durchsuchen. Üblicherweise findet eine alphanumerische Suche statt, d.h. die Einträge in der Datenbank, die das Suchkriterium erfüllen, werden in alphanumerischer Reihenfolge aufgelistet. Es kommt also auf die Stellung der Buchstaben wie auch der Ziffern und Zeichen im Suchkriterium an. Alternativ können aber auch andere Suchen als die alphanumerische Suche stattfinden. Für die Durchführung der Suche in der Datenbank des Navigationsgerätes 130, des Radios 140, des Telefons 120 oder des Kombiinstrumentes 110 können verschiedene Suchalgorithmen zum Einsatz kommen, die aber nicht Gegenstand der Erfindung sind und auf die deshalb im Folgenden nicht näher eingegangen wird.

In dem in Fig. 3 dargestellten Betriebsmodus wird die Liste der bereits eingegebenen Ziele bei dem Navigationsgerät 130 angezeigt. Es sind drei Listeneinträge aufgelistet, darunter die Heimat-Adresse des Fahrzeugführers, eine fiktive Adresse in Berlin als Platzhalter und die Adresse einer Tankstelle in Berlin. Das Suchfeld ist in Fig. 3 mit der Bezugszahl 31 versehen. Im Zustand von Fig. 3 ist im Suchfeld 31 noch kein Zeichen als Suchkriterium eingegeben worden. Die dargestellten Listeneinträge in den Feldern 33 sind das Ergebnis einer voreingestellten Suche, hier Heimatadresse, zuletzt eingegebenes Ziel und die in kürzester Entfernung erreichbare Tankstelle ausgehend von der aktuellen Position des Fahrzeuges. Im Suchfeld 31 findet sich noch ein Bedienfeld 34. Dieses hat die Funktion einer Lösch-Taste, wenn es berührt wird. Mit der ausgelösten Funktion wird dann das zuletzt in das Suchfeld 31 eingegebene Zeichen gelöscht. Das Feld in dem die Listeneinträge angezeigt werden, ist rollbar gestaltet, d.h., dass in diesem Feld ein Scroll-Vorgang durchgeführt werden kann. So werden dann die anderen Listeneinträge sichtbar. Das Feld 32 entspricht einem Seitenfeld wo weitere Menüpunkte eingeblendet werden können. Im Betriebsmodus gemäß Fig. 3 ist lediglich ein Rückpfeil 35 im Seitenfeld sichtbar. In der rechten unteren Ecke der angezeigten Bedienoberfläche ist noch ein Handschrifterkennungs-Bedienfeld 36 positioniert. Bei Berührung dieses Handschrifterkennungs-Bedienfeldes 36 wird ein Handschrifterkennungs-Betriebsmodus gestartet, bei dem die Eingabemöglichkeit mit Handschrifterkennung unterstützt wird. Diese Funktion wird auch dann gestartet, wenn das Suchfeld 31 berührt wird. Durch die Positionierung ist es für den Fahrer bequemer, wenn er das Handschrifterkennungs-Bedienfeld 36 berührt. Dieses Feld ist leicht auffindbar. Dafür kann der Fahrer den Zeigefinger zum rechten Rand der Anzeigeeinheit führen und dann ohne genau hinsehen zu müssen am Rand entlang nach unten gleiten lassen bis die Bildschirmecke spürbar ist und dort dann den Tast-Vorgang zum Einschalten des Handschrifterkennungs-Betriebsmodus durchführen. Wenn das erfolgt, wechselt die Darstellung auf der Anzeigeeinheit 30 in einen zweiten Zustand.

Für die weiteren Figuren gilt, dass gleiche Bezugszahlen die gleichen Felder und Symbole bezeichnen wie bei der Beschreibung von Fig. 3 erläutert.

Fig. 4 zeigt die angezeigten Felder und Symbole für den zweiten Betriebsmodus. Was zusätzlich angezeigt wird, ist ein Handschrifterkennungs-Eingabefeld 37, welches für die handschriftliche Eingabe von Zeichen genutzt werden kann. Das Handschrifterkennungs-Eingabefeld 37 öffnet sich ausgehend von der rechten unteren Ecke der Anzeigeeinheit 30 mit einer Geschwindigkeit wie bei einem Vorhang und erstreckt sich über einen Teil der Anzeigefläche. Im dargestellten Beispiel hat dieser Teil die Form eines Viertelkreises oder einer Viertelellipse. Das Handschrifterkennungs-Eingabefeld 37 wird durchscheinend dargestellt, d.h., dass die Listeneinträge in den Feldern 33, die teilweise von dem Handschrifterkennungs-Eingabefeld 37 überdeckt werden, durch die Fläche des Handschrifterkennungs-Eingabefeldes 37 durchscheinen und also lesbar bleiben. Es handelt sich aber um ein Ausführungsbeispiel, so dass auch andere Formen für das Handschrifterkennungs-Eingabefeld 37 möglich sind. Genauso kann auch die Größe des Handschrifterkennungs-Eingabefeldes 37 variieren, die Geschwindigkeit mit der das Feld sich aufbaut und der Grad der Transparenz des Feldes. Mit Aufbauen des Feldes verschwindet die Darstellung des Handschrifterkennungs-Bedienfeldes. Das ist in Fig. 4 ebenfalls erkennbar. Daneben wird in dem 2. Betriebsmodus in das Seitenfeld 32 zusätzlich auch ein Tastatur-Bedienfeld 38 eingeblendet.

In dem dargestellten Handschrifterkennungs-Eingabefeld 37 kann der Fahrer ein Zeichen auf den Bildschirm schreiben. Die Technik dieser Form der Eingabe von Zeichen ist im Stand der Technik bekannt. Als Beispiel wird auf das schon erwähnte Dokument DE 10 2011 110 978 A1 hingewiesen, wo weitere Einzelheiten zu dieser Technik zu finden sind.

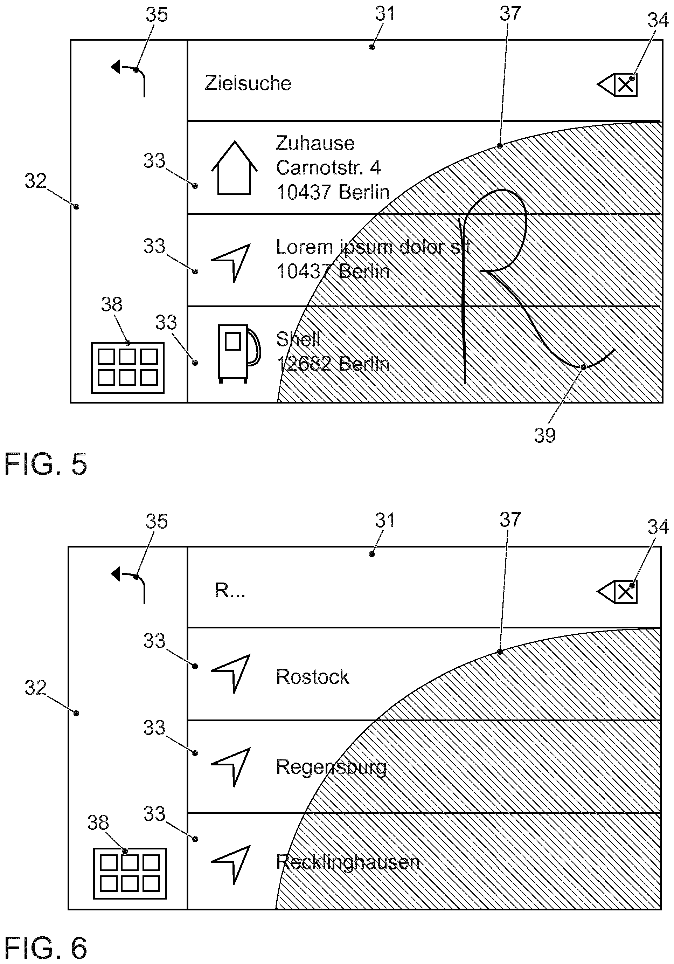

Der Vorgang des Schreibens des Zeichens per Hand in dem Handschrifterkennungs-Eingabefeld 37 ist in Fig. 5 skizziert. Das geschriebene Zeichen ist mit der Bezugszahl 39 referenziert. Es handelt sich um den Buchstaben R. Die sensorseitige Erfassung des geschriebenen Zeichens geschieht über die berührungsempfindliche Oberfläche der Anzeigeeinheit 30. Die erfassten Sensordaten werden an die Recheneinrichtung 40 weitergeleitet und dort ausgewertet. Wenn der Handschrifterkennungs-Algorithmus das Zeichen erkannt hat, werden die entsprechenden Daten für das erkannte Zeichen R an die Anzeigeeinheit 30 zurück übertragen.

Es erfolgt eine Anzeige des erkannten Zeichens R im Suchfeld 31, wie in Fig. 6 dargestellt. Die Eingabe des Zeichens erfolgte im Modus der Zielsuche des Navigationsgerätes 130. Wenn ein Buchstabe in das Suchfeld 31 eingegeben wird, so wird dieses Zeichen als der erste Buchstabe des Städtenamens interpretiert. Die Anzeige der Listeneinträge wird dadurch aktualisiert. Es werden die Listeneinträge für Städte, die mit dem Buchstaben R beginnen, angezeigt. Im angezeigten Fall erfolgte eine Sortierung nach der Größe der Städte, d.h. nach der Einwohnerzahl. Es könnte eine andere Sortierung gewählt werden, z.B. die alphanumerische Sortierung.

Der nicht überdeckte Teil der Liste steht zur Verfügung um den Scroll-Vorgang in diesem Teil der Liste durchführen zu können. Eine mögliche Verwechselung mit der handschriftlichen Eingabe des Buchstaben i wird dadurch verhindert, dass der Buchstabe i im Handschrifterkennungs-Eingabefeld 37 geschrieben werden müsste, was ja auch auf der Anzeige erkennbar ist.

Führt die Bedienperson den Scroll-Vorgang im nicht überdeckten Teil der Liste durch, wechselt die Anzeige zurück zu dem Format, das in Fig. 3 dargestellt ist.

Wenn die Bedienperson das Bedienfeld 34 für die Löschtaste berührt, so wird nur das zuletzt eingegebene Zeichen gelöscht, die Ausgabe der Ergebnislisteneinträge dementsprechend aktualisiert aber der Anzeigemodus bleibt erhalten. Auch wenn die Bedienperson das Eingabefeld 31 berührt, um z.B. an einer Stelle ein Zeichen zu ändern, dann bleibt der Anzeigemodus mit Anzeige des Handschrifterkennungs-Eingabefeldes 37 erhalten.

Berührt die Bedienperson das Tastatur-Bedienfeld 38, so wechselt der Anzeigemodus. Das Handschrifterkennungs-Eingabefeld 37 wird geschlossen und die QWERTZ-Tastatur wird eingeblendet. Dies kann in der üblichen Form geschehen, wie es z.B. von Smartphones oder Tablets bekannt ist.

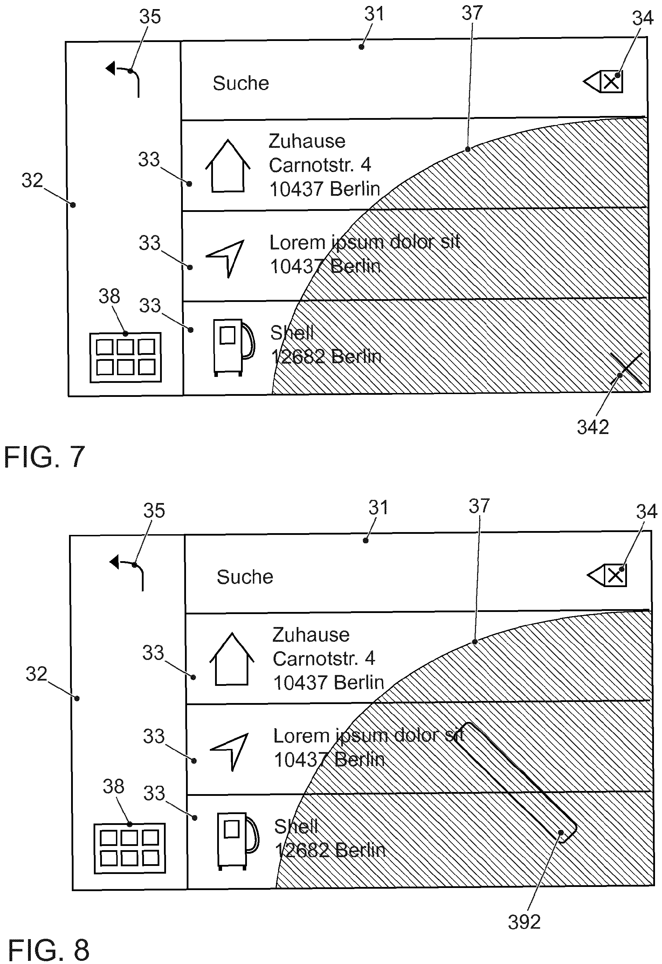

In einer anderen Ausführungsform kann bei Einblendung des Handschrifterkennungs-Eingabefeldes 37 an der Stelle wo zuvor das Handschrifterkennungs-Bedienfeld 36 angezeigt wurde ein Schließsymbol-Bedienfeld 342 eingeblendet werden. Dies ist in der Fig. 7 zu sehen. Berührt die Bedienperson nach Eingabe eines Zeichens das Schließsymbol-Bedienfeld 342, so wird das Handschrifterkennungs-Eingabefeld 37 geschlossen. Dies kann in umgekehrter Weise geschehen, wie es zuvor geöffnet wurde.

In einer weiteren Ausführungsform wird bei Einblendung des Handschrifterkennungs-Eingabefeldes 37 an der Stelle wo zuvor das Handschrifterkennungs-Bedienfeld 36 angezeigt wurde, kein Schließsymbol-Bedienfeld eingeblendet. Das Schließen des Handschrifterkennungs-Eingabefeldes 37 erfolgt, wenn von der Bedienperson eine Schließgeste vollzogen wird. Die Schließgeste ist in der Fig. 8 dargestellt. Dabei streicht die Bedienperson im Handschrifterkennungs-Eingabefeld 37 von links oben nach rechts unten. Da das Handschrifterkennungs-Eingabefeld 37 ausgehend von der rechten unteren Ecke geöffnet wird, entspricht die Schließgeste praktisch einem Zurückziehen des geöffneten Vorhangs zum Ursprung.

Die in den Feldern für die Listeneinträge 33 dargestellten Symbole (Haus, Pfeil, Zapfsäule) in Form von Icons können in einer weiteren Ausgestaltung der Erfindung ebenfalls als ein mit einer Menüfunktion versehenes Bedienfeld ausgelegt werden. Dann wird bei Berührung ebenfalls eine Funktion ausgeführt. Z.B. kann bei Anwählen des Pfeilsymbols zur Navigationsfunktion gewechselt werden, bei der die Anzeige zur Kartenansicht wechselt.

Um mehr Platz zum Vollziehen der Scroll-Geste in dem Bereich der Listeneinträge zu haben kann die Ausgestaltung so sein, dass ein Anwählen der Funktion des Icons nur bei einer Berührung erfolgt, die eine bestimmte Mindestzeit andauert. Diese Mindestzeit wird dann bei Durchführen der Scroll-Geste nicht erreicht.

In einer Ausgestaltung der Erfindung wird zwischen dem Zustand bei dem das Fahrzeug still steht und dem Zustand in dem das Fahrzeug in Bewegung ist unterschieden. So bewirkt ein Berühren des Suchfeldes 31 bei Fahrzeugstillstand das Einblenden der QWERTZ-Tastatur. Die Bedienperson kann die Zeichen durch gezielte Auswahl auf der QWERTZ-Tastatur eingeben. Sobald das Fahrzeug fährt, wird die QWERTZ-Tastatur automatisch geschlossen und das Handschrifterkennungs-Eingabefeld 37 wird automatisch geöffnet. Will der Fahrer während der Fahrt Eingaben machen, ohne dass die QWERTZ-Tastatur zuvor geöffnet war, so muss das Handschrifterkennungs-Eingabefeld 37 berührt werden wie zu Fig. 3 beschrieben. Ob das Fahrzeug in Bewegung ist, kann einfach abgefragt werden, in dem die Daten der Raddrehzahlsensoren ausgewertet werden. Hierzu ist aber ein Gateway im Fahrzeug erforderlich über das die Raddrehzahlsensordaten von der Recheneinheit 40 angefordert werden können. Sie müssen nämlich über den CAN-Antriebbus geliefert werden, der dann ebenfalls an das Gateway angeschlossen sein muss. In anderer Ausführung kann die Information ob das Fahrzeug in Bewegung ist auch anders ermittelt werden. Dies kann z.B. mit Hilfe eines Ortungssystems wie das Global Positioning System GPS erfolgen. Ein GPS-Empfänger ist für das Navigationsgerät 130 vorhanden.

Bei dem zweiten Ausführungsbeispiel, bei dem das Infotainment-System über das mobile Endgerät 20' bedient wird, wird die gesamte Menüführung für die Bedienung in Form einer App realisiert. Die App kann auf das mobile Endgerät geladen werden und wird bei Einstecken des mobilen Gerätes in die Halterung 22' automatisch gestartet. In der Halterung ist z.B. eine USB-Schnittstelle integriert über die das mobile Gerät 20' mit dem Infotainment-System des Fahrzeuges verbunden wird. Alternativ wäre die Verbindung über Bluetooth oder eine andere drahtlose oder drahtgebundene Schnittstelle möglich.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise werden das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste

- 10: Fahrzeug
- 20: Vorrichtung zur Bedienung eines Infotainment-Systems
- 20`: Vorrichtung zur Bedienung eines Infotainment-Systems
- 22`: Cradel
- 30: berührungsempfindliche Anzeigeeinheit
- 31: Suchfeld
- 32: Seitenfeld
- 33: Feld für Listeneintrag
- 34: Bedienfeld Löschtaste
- 35: Bedienfeld Zurück-Taste
- 36: Handschrifterkennungs-Bedienfeld
- 37: Handschrifterkennungs-Eingabefeld
- 38: Bedienfeld Tastatur
- 39: Schreiben des Buchstabens R
- 342: Bedienfeld Schließkreuz
- 392: Schließgeste
- 40: Mikrorechner
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 200: Infotainment-System

## Patentansprüche

1. Verfahren zum Bedienen eines Infotainment-Systems (200), bei dem eine Liste von auswählbaren Einträgen auf einer berührungsempfindlichen Anzeigeeinheit (30, 30') angezeigt wird, wobei zur Eingabe von Auswahlkriterien in der Liste und/oder zur Eingabe von Suchkriterien für die Suche von Einträgen in einer Datenbank die Anzeige auf einen Modus zur Handschrifterkennung umgeschaltet wird, wobei zur Aktivierung des Modus zur Handschrifterkennung auf der berührungsempfindlichen Anzeigeeinheit (30, 30') erstens ein Handschrifterkennungs-Bedienfeld (36) eingeblendet wird, vorzugsweise in einer Ecke der Anzeigeeinheit (30, 30') und der Modus zur Handschrifterkennung eingeleitet wird, wenn zweitens eine Bedienperson das Handschrifterkennungs-Bedienfeld (36) berührt, wobei der Modus zur Handschrifterkennung für ein Handschrifterkennungs-Eingabefeld (37) eingeleitet wird, wobei das Handschrifterkennungs-Eingabefeld (37) nur auf einem Teil der berührungsempfindlichen Anzeigeeinheit (30, 30') dargestellt wird, und wobei die Einträge der Liste ebenfalls in dem Handschrifterkennungs-Eingabefeld (37) sichtbar bleiben, **dadurch gekennzeichnet, dass** auf dem anderen Teil der berührungsempfindlichen Anzeigeeinheit (30, 30') weiterhin ein Eintrag der angezeigten Liste mittels einer Tap-Geste auswählbar ist und mittels einer Scroll-Geste ein Scroll-Vorgang durchführbar ist.

2. Verfahren nach Anspruch 1, wobei das Handschrifterkennungs-Bedienfeld (36) eine abgerundete Form aufweist.

3. Verfahren nach Anspruch 1 oder 2, wobei das Handschrifterkennungs-Eingabefeld (37) eine abgerundete Form aufweist, mit einem Zentrum an der Stelle, wo zuvor das Handschrifterkennungs-Bedienfeld (36) lokalisiert war.

4. Verfahren nach Anspruch 2 oder 3, wobei das Handschrifterkennungs-Bedienfeld (36) und/oder das Handschrifterkennungs-Eingabefeld (37) die Form eines Viertelkreises oder einer Viertelellipse aufweist.

5. Verfahren nach einem der vorhergehenden Ansprüche, wobei in dem Fall des Erkennens eines Zeichens per Handschrifteingabe als Auswahlkriterium, die Ausgabe der Listeneinträge aktualisiert wird, derart, dass die Listeneinträge so umsortiert dargestellt werden, dass die Liste mit denjenigen Einträgen beginnt, die mit dem Zeichen beginnen, das von der Handschrifterkennung identifiziert wurde.

6. Verfahren nach einem der vorhergehenden Ansprüche, wobei ein Suchfeld (31) zusätzlich angezeigt wird, in das Eingaben zum Suchen von Einträgen in der Datenbank gemacht werden können und der Modus zur Handschrifterkennung ebenfalls eingeleitet wird, wenn die Bedienperson das Suchfeld (31) berührt.

7. Verfahren nach Anspruch 6, wobei in dem Fall des Erkennens eines Zeichens per Handschrifteingabe, eine Liste angezeigt wird, derart, dass die Listeneinträge so dargestellt werden, dass nur diejenigen Listeneinträge dargestellt werden, die eine Übereinstimmung mit dem Zeichen haben, das von der Handschrifterkennung identifiziert wurde und für das Suchfeld (31) eingegeben wurde.

8. Verfahren nach einem der vorhergehenden Ansprüche, wobei der Modus zur Handschrifterkennung beendet wird durch Scrollen in der Liste der angezeigten Listeneinträge, durch Auswahl eines Bedienfeldes (342) auf dem ein Schließsymbol dargestellt ist, durch Vollziehen einer Schließ-Geste (392) im Bereich des Handschrifterkennungs-Eingabefeldes (37) oder durch Berühren eines Seitenfeldes (32) neben der angezeigten Liste.

9. Verfahren nach Anspruch 6 oder 7, wobei durch das Löschen eines Zeichens im Suchfeld (31) die Anzeige der Listeneinträge dementsprechend aktualisiert wird, jedoch der Modus zur Handschrifterkennung erhalten bleibt.

10. Verfahren nach Anspruch 6 oder 7, wobei die Eingabe in das Suchfeld (31) in einem anderen Betriebsmodus durch Bedienen einer eingeblendeten Tastatur auf der Anzeigeeinheit (30, 30`) erfolgt, der jedoch bei Einsatz des Infotainment-Systems (200) in einem Fahrzeug (10) unterbunden wird, wenn sich das Fahrzeug (10) bewegt.

11. Vorrichtung zum Bedienen eines Infotainment-Systems, **dadurch gekennzeichnet, dass** die Vorrichtung zum Durchführen des Verfahrens nach einem der vorhergehenden Ansprüche eingerichtet ist.

12. Computerprogramm, **dadurch gekennzeichnet, dass** das Computerprogramm Programmschritte aufweist, die bei Abarbeitung des Programms in einer Recheneinheit (40) ein Verfahren nach einem der Ansprüche 1 bis 10 durchführen.

13. Kraftfahrzeug, **dadurch gekennzeichnet, dass** das Kraftfahrzeug (10) eine Vorrichtung nach Anspruch 11 aufweist.

## Claims

1. Method for operating an infotainment system (200), in which a list of selectable entries is displayed on a touch-sensitive display unit (30, 30'), wherein the display is switched to a handwriting recognition mode for inputting selection criteria in the list and/or for inputting search criteria for searching entries in a database, wherein, to activate the handwriting recognition mode on the touch-sensitive display unit (30, 30'), firstly a handwriting recognition control panel (36) is shown, preferably in a corner of the display unit (30, 30'), and the handwriting recognition mode is initiated when, secondly, an operator touches the handwriting recognition control panel (36), wherein the handwriting recognition mode is initiated for a handwriting recognition input field (37), wherein the handwriting recognition input field (37) is displayed only on one part of the touch-sensitive display unit (30, 30'), and wherein the entries of the list also remain visible in the handwriting recognition input field (37),
**characterized in that,** on the other part of the touch-sensitive display unit (30, 30'), an entry of the displayed list can also be selected by means of a tap gesture and a scroll operation can be performed by means of a scroll gesture.

2. Method according to claim 1, wherein the handwriting recognition control panel (36) has a rounded shape.

3. Method according to claim 1 or 2, wherein the handwriting recognition input field (37) has a rounded shape with a center at the location where the handwriting recognition control panel (36) was previously located.

4. Method according to claim 2 or 3, wherein the handwriting recognition control panel (36) and/or the handwriting recognition input field (37) has the shape of a quarter circle or a quarter ellipse.

5. Method according to any of the preceding claims, wherein, in the case of recognition of a character by handwriting input as a selection criterion, the output of the list entries is updated such that the list entries are displayed so as to be reordered in such a way that the list begins with those entries which begin with the character which was identified by the handwriting recognition.

6. Method according to any of the preceding claims, wherein a search field (31) is additionally displayed, into which search field inputs can be made for searching entries in the database and the handwriting recognition mode is also initiated when the operator touches the search field (31).

7. Method according to claim 6, wherein in the case of recognition of a character by handwriting input, a list is displayed such that the list entries are displayed in such a way that only those list entries are displayed which have a match with the character that was identified by the handwriting recognition and entered for the search field (31).

8. Method according to any of the preceding claims, wherein the handwriting recognition mode is terminated by scrolling in the list of displayed list entries, by selecting a control panel (342) on which a close symbol is displayed, by performing a close gesture (392) in the region of the handwriting recognition input field (37), or by touching a page field (32) next to the displayed list.

9. Method according to claim 6 or 7, wherein the display of the list entries is updated accordingly by deleting a character in the search field (31), with the handwriting recognition mode being retained, however.

10. Method according to claim 6 or 7, wherein the input into the search field (31) is made in another operating mode by operating a superimposed keyboard on the display unit (30, 30'), which keyboard is, however, inhibited when the infotainment system (200) is used in a vehicle (10) when the vehicle (10) is moving.

11. Device for operating an infotainment system, **characterized in that** the device is set up to carry out the method according to any of the preceding claims.

12. Computer program, **characterized in that** the computer program has program steps which, when the program is processed in a computing unit (40), carry out a method according to any of claims 1 to 10.

13. Motor vehicle, **characterized in that** the motor vehicle (10) comprises a device according to claim 11.

## Revendications

1. Procédé pour la commande d'un système d'infodivertissement (200), dans lequel une liste d'entrées pouvant être sélectionnées est affichée sur une unité d'affichage (30, 30') tactile, dans lequel l'affichage est commuté sur un mode pour la reconnaissance d'écriture manuscrite pour l'entrée de critères de sélection dans la liste et/ou pour l'entrée de critères de recherche pour la recherche d'entrées dans une base de données, dans lequel, pour l'activation du mode pour la reconnaissance d'écriture manuscrite sur l'unité d'affichage (30, 30') tactile, premièrement, un panneau de commande de reconnaissance d'écriture manuscrite (36) est affiché, de préférence dans un coin de l'unité d'affichage (30, 30'), et le mode pour la reconnaissance d'écriture manuscrite est initié, deuxièmement, lorsqu'un opérateur touche le panneau de commande de reconnaissance d'écriture manuscrite (36), dans lequel le mode pour la reconnaissance d'écriture manuscrite est initié pour un champ d'entrée de reconnaissance d'écriture manuscrite (37), dans lequel le champ d'entrée de reconnaissance d'écriture manuscrite (37) n'est affiché que sur une partie de l'unité d'affichage (30, 30') tactile, et dans lequel les entrées de la liste restent également visibles dans le champ d'entrée de reconnaissance d'écriture manuscrite (37), **caractérisé en ce que** sur l'autre partie de l'unité d'affichage (30, 30') tactile, une entrée de la liste affichée peut encore être sélectionnée à l'aide d'un geste de tapotement et une opération de défilement peut être réalisée à l'aide d'un geste de défilement.

2. Procédé selon la revendication 1, dans lequel le panneau de commande de reconnaissance d'écriture manuscrite (36) présente une forme arrondie.

3. Procédé selon la revendication 1 ou la revendication 2, dans lequel le panneau d'entrée de reconnaissance d'écriture manuscrite (37) présente une forme arrondie, comportant un centre à l'endroit où le panneau de commande de reconnaissance d'écriture manuscrite (36) était précédemment localisé.

4. Procédé selon la revendication 2 ou la revendication 3, dans lequel le panneau de commande de reconnaissance d'écriture manuscrite (36) et/ou le panneau d'entrée de reconnaissance d'écriture manuscrite (37) présente la forme d'un quart de cercle ou d'un quart d'ellipse.

5. Procédé selon l'une quelconque des revendications précédentes, dans lequel, dans le cas de la reconnaissance d'un caractère par entrée d'écriture manuscrite comme critère de sélection, la sortie des entrées de la liste est mise à jour de telle sorte que les entrées de la liste sont représentées dans un tel ordre différent que la liste commence par les entrées qui commencent par le caractère qui a été identifié par la reconnaissance d'écriture manuscrite.

6. Procédé selon l'une des revendications précédentes, dans lequel un champ de recherche (31) est en outre affiché, dans lequel des entrées peuvent être effectuées pour la recherche d'entrées dans la base de données et le mode pour la reconnaissance d'écriture manuscrite est également initié lorsque l'opérateur touche le champ de recherche (31).

7. Procédé selon la revendication 6, dans lequel, dans le cas de la reconnaissance d'un caractère par entrée d'écriture manuscrite, une liste est affichée de telle sorte que les entrées de liste sont représentées de telle sorte que seules les entrées de liste qui ont une correspondance avec le caractère qui a été identifié par la reconnaissance d'écriture manuscrite et entré pour le champ de recherche (31) sont représentées.

8. Procédé selon l'une des revendications précédentes, dans lequel le mode pour la reconnaissance d'écriture manuscrite est quitté en faisant défiler la liste des entrées de liste affichées, en sélectionnant un panneau de commande (342) sur lequel une icône de fermeture est représentée, en effectuant un geste de fermeture (392) dans la zone du champ d'entrée de reconnaissance d'écriture manuscrite (37) ou en touchant un panneau latéral (32) adjacent à la liste affichée.

9. Procédé selon la revendication 6 ou la revendication 7, dans lequel l'effacement d'un caractère dans le champ de recherche (31) met à jour l'affichage des entrées de la liste en conséquence, mais le mode pour la reconnaissance d'écriture manuscrite est conservé.

10. Procédé selon la revendication 6 ou la revendication 7, dans lequel l'entrée dans le champ de recherche (31) est effectuée dans un autre mode de fonctionnement en utilisant un clavier affiché sur l'unité d'affichage (30, 30'), mais qui est interrompu lorsque le système d'infodivertissement (200) est utilisé dans un véhicule (10) lorsque le véhicule (10) se déplace.

11. Dispositif pour la commande d'un système d'infodivertissement, **caractérisé en ce que** le dispositif est conçu pour la réalisation du procédé selon l'une des revendications précédentes.

12. Programme informatique, **caractérisé en ce que** le programme informatique présente des étapes de programme qui, lors du traitement du programme dans une unité de calcul (40), réalisent un procédé selon l'une des revendications 1 à 10.

13. Véhicule automobile, **caractérisé en ce que** le véhicule automobile (10) présente un dispositif selon la revendication 11.
